# EUROPÄISCHE PATENTSCHRIFT

(11) **EP 2 340 416 B1**
(45) Veröffentlichungstag und Bekanntmachung des Hinweises auf die Patenterteilung: **04.03.2015**
(21) Anmeldenummer: 09782808.1
(22) Anmeldetag: 09.09.2009
(51) Int. Cl.: G01D 5/244

(54) **VORRICHTUNG UND VERFAHREN ZUR DATENÜBERTRAGUNG ZWISCHEN EINEM POSITIONSMESSGERÄT UND EINER FOLGEELEKTRONIK**
DEVICE AND METHOD FOR THE DATA TRANSFER BETWEEN A POSITION MEASUREMENT DEVICE AND SUBSEQUENT ELECTRONICS
DISPOSITIF ET PROCÉDÉ DE TRANSMISSION DE DONNÉES ENTRE UN APPAREIL DE MESURE DE POSITION ET UNE ÉLECTRONIQUE D'AVAL

(30) Priorität: 24.10.2008 DE 102008053105
(43) Veröffentlichungstag der Anmeldung: 06.07.2011
(73) Patentinhaber: Dr. Johannes Heidenhain GmbH, 83301 Traunreut (DE)
(72) Erfinder: KOBLER, Alexander, 84508 Burgkirchen (DE); HELLMICH, Heik H., 83370 Seeon (DE); WALTER, Michael, 84570 Polling (DE); HAYASHI, Terukiyo, Hachiouji-shi Tokyo 192-0362 (JP); SCHOPPMANN, Ruedi, Shibuya-ku Tokyo 151-0073 (JP); YAMAMOTO, Takeshi, Hachiouji-shi Tokyo 193-0826 (JP)
(86) Internationale Anmeldenummer: PCT/EP2009/061678
(87) Internationale Veröffentlichungsnummer: WO 2010/046179

(56) Entgegenhaltungen:
- DE-A1- 10 344 090
- US-A- 6 124 588
- US-A1- 2004 133 373

## Beschreibung

Die Erfindung betrifft eine Vorrichtung und ein Verfahren zur Datenübertragung zwischen einem Positionsmessgerät und einer Folgeelektronik nach den Ansprüchen 1, bzw. 8. Bei einer derartigen Vorrichtung, bzw. mittels eines erfindungsgemäßen Verfahrens, ist eine Modifikation der der Datenübertragung zugrundeliegende Schnittstelle im Positionsmessgerät möglich.

In der Automatisierungstechnik werden vermehrt Positionsmessgeräte eingesetzt, die einen absoluten Positionswert zur Verfügung stellen. Dadurch entfallen bestimmte Nachteile sogenannter inkrementaler Positionsmessgeräte, wie z.B. die Notwendigkeit, nach dem Einschalten eine Referenzfahrt vornehmen zu müssen, um eine Referenzposition zu finden, die als Bezugspunkt für die weitere Positionsmessung durch Zählen von Teilungsstrichen dient.

Für die Übertragung der absoluten Positionswerte kommen hauptsächlich serielle Datenschnittstellen zum Einsatz, da diese mit nur wenigen Datenübertragungsleitungen auskommen und trotzdem hohe Datenübertragungsraten aufweisen. Besonders vorteilhaft sind hier die sogenannten synchronseriellen Schnittstellen, die eine uni- oder bidirektionale Datenleitung und eine Taktleitung aufweisen. Die Übertragung von Datenpaketen über die Datenleitung erfolgt synchron zu einem Taktsignal auf der Taktleitung.

Die EP0660209B2 beschreibt eine synchron-serielle Schnittstelle mit einer bidirektionalen Datenleitung und einer unidirektionalen Taktleitung. Hier ist eine bidirektionale Übertragung von Daten - von der Folgeelektronik zum Positionsmessgerät und vom Positionsmessgerät zur Folgeelektronik - möglich. Die Datenübertragung erfolgt synchron zu einem Taktsignal auf der Taktleitung. Dieses Prinzip bildet die Grundlage einer unter der Bezeichnung "EnDat" bekannten Schnittstelle der Anmelderin.

Die DE19701310B4 beschreibt eine Vorrichtung zur Datenübertragung zwischen einem als Positionsmesssystem ausgebildeten Messwertaufnehmer und einer Verarbeitungseinheit. Durch die Übertragung eines Referenzsignals auf einer der Signal-Übertragungsleitungen, über die die Datenübertragung zwischen Messwertaufnehmer und Verarbeitungseinheit erfolgt, kann das Positionsmesssystem in verschiedene Betriebsmodi geschaltet werden.

Die DE10344090A1 beschreibt eine Positionsmesseinrichtung, die eine Kommunikationseinheit umfasst, die einerseits eine Kommunikation mit einer Folgeelektronik erlaubt und andererseits eine interne Schnittstelleneinheit aufweist, über die die Übertragung von Daten zwischen der Kommunikationseinheit und einer Signalerzeugungseinheit erfolgt. Weiter ist vorgesehen, dass Messdatenanforderungsbefehle unter Umgehung der internen Schnittstelleneinheit direkt zur Signalerzeugungseinheit übertragen werden, so dass die Erzeugung neuer Messdaten ohne weitere Verzögerung eingeleitet werden kann.

Durch die fortschreitende Miniaturisierung in der Elektrotechnik wird es möglich, in Positionsmessgeräte immer mehr Funktionen zu integrieren. So werden neben den Positionswerten mittlerweile häufig noch Zusatzinformationen, wie beispielsweise die Geschwindigkeit, also die Änderung der Position über der Zeit, sowie Statusinformationen, die Aussagen über den Betriebszustand des Positionsmessgerätes zulassen, erzeugt. Für die Steuerung komplexer Abläufe oder zur Durchführung aufwendiger Berechnungen werden Mikroprozessoren eingesetzt. Moderne Datenschnittstellen weisen deshalb neben reinen Positionsanforderungsbefehlen auch weitere Befehle auf, um Zusatzinformationen anzufordern oder Speicherbereiche im Positionsmessgerät zu beschreiben oder auszulesen.

Standardisierte Schnittstellen bieten den Vorteil, dass Messgeräte, die mit einer derartigen Schnittstelle ausgerüstet sind, direkt an eine Folgeelektronik, beispielsweise ein Werkzeugmaschinensteuerung, angeschlossen werden können. Eine weitere Anpassung ist, solange beide Geräte das der Schnittstelle zugrunde liegende Schnittstellenprotokoll einhalten, nicht notwendig. Dadurch wird es aber andererseits schwierig, die Schnittstelle zu erweitern, etwa um neue Befehle bereitzustellen, oder bestehende Befehle zu verändern, um sie speziellen Gegebenheiten und ggf. einem erweiterten Funktionsumfang der Positionsmessgeräte anzupassen.

Es ist daher Aufgabe der Erfindung, eine Vorrichtung, sowie ein Verfahren anzugeben, mit dem eine in einem Positionsmessgerät integrierte Schnittstelle modifiziert werden kann.

Diese Aufgabe wird gelöst durch eine Vorrichtung nach Anspruch 1, sowie ein Verfahren nach Anspruch 8. Vorteilhafte Details ergeben sich aus den von Anspruch 1, bzw. 8 abhängigen Ansprüchen.

Es wird nun eine Vorrichtung, sowie ein Verfahren zur Datenübertragung zwischen einem Positionsmessgerät und einer Folgeelektronik über einen Datenübertragungskanal vorgeschlagen, wobei das Positionsmessgerät eine Schnittstelleneinheit und eine Verarbeitungseinheit umfasst und die Schnittstelleneinheit zum einen mit dem Datenübertragungskanal und zum andern zum Zwecke eines internen Datenaustauschs mittels eines Anfragekanals und eines Antwortkanals mit der Verarbeitungseinheit verbunden ist. Die Schnittstelleneinheit umfasst einen Befehlsinterpreter, mit dem unter Verwendung von Umwandlungsregeln Befehle, die über den Datenübertragungskanal eintreffen, in interne Anfragen umwandelbar und über den Anfragekanal der Verarbeitungseinheit zuführbar sind, sowie Antwortdaten, die von der Verarbeitungseinheit über den Antwortkanal eintreffen, in Ausgabedaten umwandelbar sind. Weiter umfasst die Schnittstelleneinheit einen Regelspeicher zum Speichern der Umwandlungsregeln, der erfindungsgemäß zumindest teilweise modifizierbar ist.

Weitere Vorteile sowie Einzelheiten der vorliegenden Erfindung ergeben sich aus der nachfolgenden Beschreibung anhand der Figuren. Dabei zeigt
- Figur 1: ein Blockdiagramm einer erfindungsgemäßen Vorrichtung,
- Figur 2: ein Beispiel für die Modifikation eines Regelspeichers.

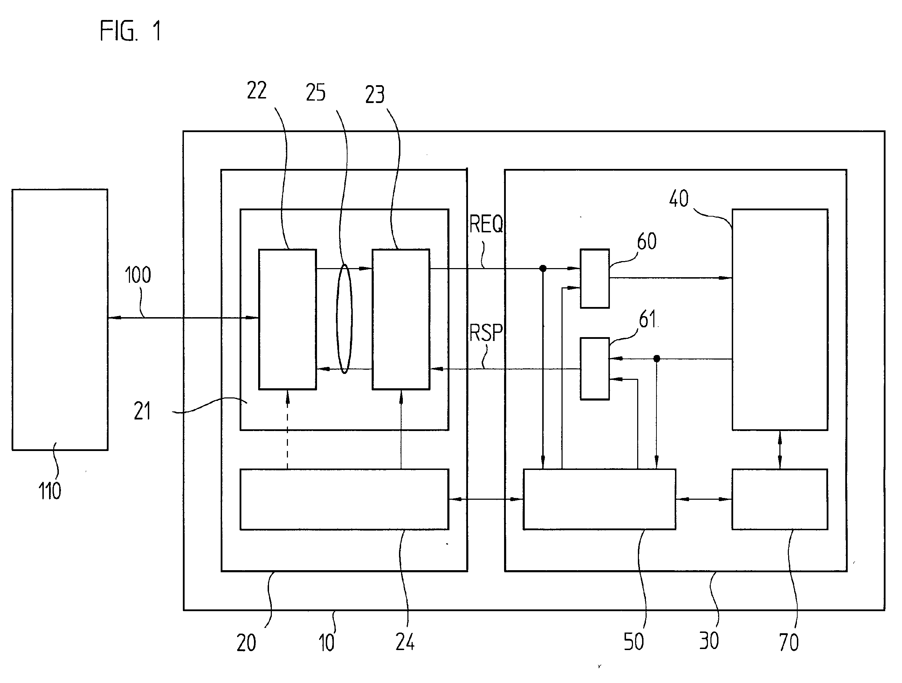

Figur 1 zeigt ein Blockdiagramm einer erfindungsgemäßen Vorrichtung mit einem Positionsmessgerät 10, das über einen Datenübertragungskanal 100 mit einer Folgeelektronik 110, beispielsweise einer numerischen Werkzeugmaschinensteuerung (NC), verbunden ist. Positionsmessgerät 10 und Folgeelektronik 110 tauschen über den Datenübertragungskanal 100 Befehle und Daten aus. Meist handelt es sich bei einem derartigen System um eine Master-Slave-Verbindung, wobei die Folgeelektronik 110 die Funktion des Masters und das Positionsmessgerät die Funktion des Slaves übernimmt, d.h. jede Datenübertragung wird von der Folgeelektronik 110 initiiert, während das Positionsmessgerät 10 Daten nur auf Anforderung zur Folgeelektronik 110 übermittelt.

Der Datenübertragungskanal 100 ist meist für serielle Datenübertragung ausgelegt, d.h. er umfasst wenigstens eine serielle Datenverbindung, die, wenn die Übertragung differentiell nach RS-485-Standard erfolgt, aus wenigstens einem Leitungspaar besteht und ist auf beiden Seiten mit geeigneten Treiber-/Empfängerbausteinen abgeschlossen. Findet die Übertragung über nur ein bidirektional betriebenes differentielles Leitungspaar statt, spricht man auch von einer 2-Draht-Schnittstelle. Die einleitend erwähnte serielle Schnittstelle EnDat verwendet dagegen zwei differentielle Leitungspaare und wird somit als 4-Draht-Schnittstelle bezeichnet. Differentielle Datenübertragung ist dem Fachmann seit langem bekannt und wird hier nicht weiter beschrieben.

Der Datenübertragungskanal 100 ist im Positionsmessgerät 10 mit einer Schnittstelleneinheit 20 verbunden, die Befehle und Eingangsdaten von der Folgeelektronik 110 empfängt, interpretiert und über einen Anfragekanal REQ zu einer Verarbeitungseinheit 30 weiterleitet. Diese verarbeitet Befehle und Eingangsdaten und sendet, wenn Ausgangsdaten, z.B. ein absoluter Positionswert, angefordert wurden, diese über eine Antwortkanal RSP zur Schnittstelleneinheit 20, die die Ausgangsdaten entsprechend dem Schnittstellenprotokoll aufbereitet und an die Folgeelektronik 110 sendet.

Die Verarbeitungseinheit 30 umfasst eine Positionsmesseinheit 40, sowie eine CPU 50. Außerdem sind Datenmultiplexer 60, 61 vorgesehen, die den direkten Datenaustausch zwischen der Positionsmesseinheit 40 und der CPU 50 ermöglichen. Weiter umfasst die Verarbeitungseinheit 30 eine Speichereinheit 70, in der beispielsweise das Betriebsprogramm der CPU 50 und von der Positionsmesseinheit 40 benötigte Daten, z.B. Kalibrierwerte, gespeichert sind. Darüber hinaus kann die Speichereinheit 70 auch Daten über den Motor, oder die Maschine, an der das Positionsmessgerät 10 betrieben wird, enthalten. Man spricht in diesem Zusammenhang auch von einem elektronischen Typenschild. Die Speichereinheit 70 kann sowohl nichtflüchtige Speicherbereiche (ROM, EEPROM), als auch flüchtige Speicherbereiche (RAM) umfassen.

Sowohl die Positionsmesseinheit 40, als auch die CPU 50 sind mit dem Anfragekanal REQ und dem Antwortkanal RSP verbunden. Das bedeutet, dass über den Datenübertragungskanal 100 auch Zugriff auf die CPU 50 und insbesondere auch auf die mit der CPU 50 verbundene Speichereinheit 70 möglich ist. Somit können von der Folgeelektronik 110 Speicherzellen der Speichereinheit 70 gelesen, sowie flüchtige Speicherbereiche beschrieben und wiederprogrammierbare Speicherbereiche geändert werden. Über diesen Weg kann damit beispielsweise die CPU 50 programmiert, bzw. können existierende Programme der CPU 50 modifiziert werden.

Dadurch, dass die CPU 50 über die Datenmultiplexer 60, 61 auch direkt mit der Positionsmesseinheit 40 kommunizieren kann, können auch komplexe Anfragen bearbeitet werden, die hohen Rechenaufwand erfordern. Ebenfalls können über diesen Weg beispielsweise Diagnosefunktionen realisiert werden.

Die Positionsmesseinheit 40 erzeugt durch Abtastung einer Maßverkörperung Positionssignale und wandelt diese in digitale Positionswerte um, die die absolute Position einer Abtasteinheit bezogen auf die Maßverkörperung angeben. Das physikalische Prinzip, das der Abtastung zugrunde liegt, ist hierbei nicht relevant, es können beispielsweise optische, magnetische oder induktive Messprinzipien zum Einsatz kommen. Neben Positionswerten können in der Positionsmesseinheit 40 noch weitere Daten erzeugt werden. Dazu gehören beispielsweise weitere aus der Relativbewegung zwischen Abtasteinheit und Maßverkörperung resultierende Messwerte, wie Geschwindigkeit oder Beschleunigung. Bei den weiteren Daten kann es sich aber auch um Messwerte, die die Umgebungsbedingungen betreffen, z.B. Temperaturwerte, handeln. Schließlich können als weitere Daten auch Statusinformationen zur Verfügung gestellt werden, beispielsweise in Form von Statusbits oder eines Statusworts, dessen Bits Warn- oder Fehlerzustände signalisieren. Daten, die von der Positionsmesseinheit 40 abgefragt werden können, sind beispielsweise in Registern mit einer definierten Datenwortbreite (z.B. 16 Bit) abgelegt, die einzeln adressiert werden können.

Die interne Kommunikation im Positionsmessgerät 10, die zwischen der Schnittstelleneinheit 20 und der Verarbeitungseinheit 30 über den Anfragekanal REQ und den Antwortkanal RSP stattfindet, ist weitgehend unabhängig vom Schnittstellenprotokoll, das die Kommunikation zwischen Folgeelektronik 110 und Positionsmessgerät 10 über den Datenübertragungskanal 100 bestimmt. Um einen möglichst schnellen Datenaustausch zwischen der Schnittstelleneinheit 20 und der Verarbeitungseinheit 30 über den Anfragekanal REQ und den Antwortkanal RSP zu ermöglichen, wird hier bevorzugt parallele Datenübertragung eingesetzt. Dadurch kann die Zeitspanne zwischen dem Eintreffen eines Befehls über den Datenübertragungskanal 100 und dem Senden von angeforderten Daten (z.B. dem Positionswert) über den Datenübertragungskanal 100 minimiert werden. Es sei an dieser Stelle ausdrücklich darauf hingewiesen, dass der Anfragekanal REQ und der Antwortkanal RSP lediglich zum besseren Verständnis als getrennte Verbindungen gezeichnet sind. In einer alternativen Ausgestaltung kann hier auch eine bidirektionale parallele Datenschnittstelle eingesetzt werden.

Befehle, die von der Folgeelektronik 110 über den Datenübertragungskanal 100 zum Positionsmessgerät 10 gesendet werden, werden in der Schnittstelleneinheit 20 einem Befehlsinterpreter 21 zugeführt. Dieser erkennt eintreffende Befehle, wandelt sie mithilfe von Umwandlungsregeln in interne Anfragen um und leitet diese über den Anfragekanal REQ zur Verarbeitungseinheit 30 weiter. Ebenso wandelt der Befehlsinterpreter 21 Antwortdaten, die in Folge einer internen Anfrage von der Verarbeitungseinheit 30 über den Antwortkanal RSP bei der Schnittstelleneinheit 20 eintreffen, unter Anwendung von Umwandlungsregeln in Ausgabedaten entsprechend dem Schnittstellenprotokoll um und sendet sie über den Datenübertragungskanal 100 zur Folgeelektronik 110. Treffen mit einem Befehl auch Eingangsdaten ein, so werden diese, nachdem sie ggf. auch mithilfe von Umwandlungsregeln in ein internes Format umgewandelt wurden, ebenfalls über den Anfragekanal REQ zur Verarbeitungseinheit 30 übertragen.

Auf dem Markt existiert eine Vielzahl von spezifischen digitalen, meist seriellen Datenschnittstellen für Positionsmessgeräte 10. Populäre Vertreter sind beispielsweise unter den Bezeichnungen Hiperface oder EnDat bekannt. Um die Anpassung der Elektronik eines Positionsmessgerätes 10 an verschiedenste Schnittstellen zu vereinfachen, ist es vorteilhaft, den Befehlsinterpreter 21 modular aufzubauen. In einer bevorzugten Ausführungsform besteht der Befehlsinterpreter 21 deshalb aus einem spezifischen Schnittstellenmodul 22 und einem allgemeinen Schnittstellenmodul 23.

Das spezifische Schnittstellenmodul 22 wandelt Befehle und ggf. Eingangsdaten, die über den Datenübertragungskanal 100, der aus einer spezifischen Schnittstelle, beispielsweise EnDat besteht, von der Folgeelektronik 110 eintreffen, in ein standardisiertes Befehlsformat um und überträgt die standardisierten Befehle/Eingangsdaten zum allgemeinen Schnittstellenmodul 23. Außerdem wandelt das spezifische Schnittstellenmodul 22 Ausgabedaten, die in einem standardisierten Ausgabeformat vom allgemeinen Schnittstellenmodul 23 eintreffen, in Ausgabedaten im spezifischen Ausgabeformat um und sendet diese zur Folgeelektronik 110. Da die Datenübertragung über serielle Schnittstellen meist in Form von Datenpaketen erfolgt, gehört beispielsweise auch das Extrahieren von Befehlen/Eingangsdaten aus eintreffenden Datenpaketen, sowie die Ergänzung der Ausgabedaten um Start- bzw. Stopbits und sicherheitstechnische Zusatzinformationen (CRC) zu den Aufgaben des spezifischen Schnittstellenmoduls 22. Schließlich erzeugt das spezifische Schnittstellenmodul 22 bei bidirektionaler Datenübertragung die Umschaltsignale für die entsprechenden Treiber-/Empfängerbausteine im Positionsmessgerät 10.

Das allgemeine Schnittstellenmodul 23 wandelt die im standardisierten Befehlsformat eintreffenden Befehle/Eingangsdaten entsprechend den oben beschriebenen Umwandlungsregeln in interne Anfragen und die von der Verarbeitungseinheit 30 eintreffenden Antwortdaten in das standardisierte Ausgabeformat um. Der Datenaustausch zwischen dem spezifischen Schnittstellenmodul 22 und dem allgemeinen Schnittstellenmodul 23 erfolgt über eine Standardschnittstelle 25 bei der es sich wiederum aufgrund von der hohen Datenübertragungsgeschwindigkeit bevorzugt um eine parallele Schnittstelle handelt. Durch die Aufteilung des Befehlsinterpreters 21 in ein spezifisches Schnittstellenmodul 22 und ein allgemeines Schnittstellenmodul 23 kann das Positionsmessgerät 10 durch Verwendung verschiedener spezifischer Schnittstellenmodule 22 in einfacher Weise an verschiedenste spezifische Datenschnittstellen, wie z.B. EnDat, Hiperface o.a., angepasst werden.

Der Befehlsinterpreter 21, bzw. das spezifische Schnittstellenmodul 22 und/oder das allgemeine Schnittstellenmodul 23, können beispielsweise als Zustandsmaschinen ausgeführt sein, deren Zustände entsprechend der Umwandlungsregeln gesteuert werden. Dadurch ist eine schnelle und effiziente Bearbeitung gewährleistet.

In der Schnittstelleneinheit 20 ist weiter ein Regelspeicher 24 vorgesehen, in dem Umwandlungsregeln sowohl für Befehle, die das Schnittstellenprotokoll umfasst, als auch für die aus der Ausführung der Befehle in der Verarbeitungseinheit 30 resultierenden und über den Antwortkanal RSP eintreffenden Daten, gespeichert sind. Der Regelspeicher 24 kann Umwandlungsregeln für das allgemeine Schnittstellenmodul 23 und/oder das spezifische Schnittstellenmodul 22 enthalten.

Beispiele für Befehle sind:
- Anforderung eines Positions-/ Geschwindigkeits-/Beschleunigungswertes
- Anforderung eines zusätzlichen Messwerts (Temperatur)
- Anforderung einer Zusatzinformation (Statusinformation)
- Auswahl eines Speicherbereichs in der Speichereinheit 70
- Lesezugriff auf einen Speicherbereich / eine Speicheradresse
- Schreibzugriff auf einen Speicherbereich / eine Speicheradresse
- Übertragung eines Rücksetzsignals

Die Befehle können sowohl die Verarbeitungseinheit 30, als auch die CPU 50, bzw. mit diesen Einheiten verbundene Speicherinhalte in der Speichereinheit 70 betreffen. Insbesondere ist es auch möglich, durch eine spezielle Umwandlungsregel das allgemeine Schnittstellenmodul 23 transparent zu schalten und dadurch eine direkte Kommunikation zwischen der CPU 50 und dem spezifischen Schnittstellenmodul 22 zu ermöglichen.

Erfindungsgemäß ist dieser Regelspeicher 24 zumindest teilweise modifizierbar ausgeführt. Dadurch wird die Möglichkeit geschaffen, die Bearbeitung von Befehlen abzuändern und sogar neue Befehle zu implementieren. Ebenso wird es möglich, Antwortdaten, die in Folge eines Befehls in der Verarbeitungseinheit 30 erzeugt und zur Schnittstelleneinheit 20 übertragen werden, in Ausgabedaten umzuwandeln, deren Format oder Inhalt von der ursprünglichen Definition abweicht.

### Hierzu ein Beispiel:

In einem Standard-Schnittstellenprotokoll für sicherheitsrelevante Anwendungen sendet das Positionsmessgerät 10 als Resultat auf einen Positionsanforderungsbefehl, der von der Folgeelektronik 110 über den Datenübertragungskanal 100 zum Positionsmessgerät 10 gesendet wird, einen ersten Positionswert mit 24 Bit Auflösung, gefolgt von einem zweiten Positionswert mit 16 Bit Auflösung, der aus Sicherheitsgründen unabhängig vom ersten Positionswert gebildet wird. Hierzu ist im Positionsmessgerät 10 folgender Ablauf erforderlich:
Der Befehlsinterpreter 21 identifiziert den eintreffenden Befehl und wandelt ihn, entsprechend den Umwandlungsregeln für diesen Befehl, in Anfragen um, die er über den Anfragekanal REQ an die Positionsmesseinheit 40 weiterleitet. In diesem Fall sind für die zwei Positionswerte zwei Anfragen nötig. Die Positionsmesseinheit 40 ermittelt den jeweils angefragten Positionswert und führt ihn über den Antwortkanal RSP dem Befehlsinterpreter 21 zu. Dieser fügt die Positionswerte entsprechend den dem Positionsanforderungsbefehl zugeordneten Umwandlungsregeln zu einem Ergebnis-Datenwort zusammen und sendet dieses über den Datenübertragungskanal 100 zur Folgeelektronik 110.

Es soll nun angenommen werden, dass in einer speziellen Applikation eine genaue Überwachung der Betriebstemperatur des Positionsmessgeräts 10 erforderlich ist. Im Standard-Schnittstellenprotokoll ist zwar ein spezieller Befehl für die Anforderung des Temperaturwertes enthalten, der zusätzliche Zeitbedarf für das abwechselnde Anfordern von Positions- und Temperaturwerten beeinflusst aber das Regelverhalten eines in der Applikation enthaltenen Antriebs nachteilig. Andererseits sei in dieser speziellen Applikation der erste Positionswert mit 24 Bit Auflösung ausreichend, die Übertragung des zweiten Positionswerts mit 16 Bit Auflösung also nicht nötig. Durch Änderung der Umwandlungsregeln, die für die Bearbeitung des Positionsanforderungsbefehls im Regelspeicher 24 abgelegt sind, kann der Positionsanforderungsbefehl nun so modifiziert werden, dass das Positionsmessgerät 10, anstatt von zwei voneinander unabhängig erzeugten Positionswerten, ein kombiniertes Datenwort erzeugt, das aus dem ersten Positionswert mit 24 Bit Auflösung, sowie einem Temperaturwert mit 16 Bit Auflösung besteht.

Hierzu werden die Umwandlungsregeln, die im Regelspeicher 24 für den Positionsanforderungsbefehl abgelegt ist, dahingehend geändert, dass der Befehlsinterpreter 21 auf einen Positionsanforderungsbefehl jetzt mit einer ersten Anfrage, wie bisher, von der Positionsmesseinheit 40 den Positionswert mit 24 Bit Auflösung anfordert, dann aber mit einer zweiten Anfrage einen Temperaturwert mit 16 Bit. Je nachdem, ob der Temperaturwert von der Positionsmesseinheit 40 oder der CPU 50 erzeugt wird, kann die zweite Anfrage an eine dieser Einheiten gerichtet sein. Der Befehlsinterpreter 21 bildet jetzt, entsprechend den Umwandlungsregeln für die Antwortdaten, aus den über den Antwortkanal RSP eintreffenden Werten ein Ergebnis-Datenwort, das den Positionswert und den Temperaturwert umfasst.

Alternativ zur Änderung der Umwandlungsregel für den Positionsanforderungsbefehl kann der Regelspeicher 24 auch um einen neuen, speziellen Positionsanforderungsbefehl erweitert werden.

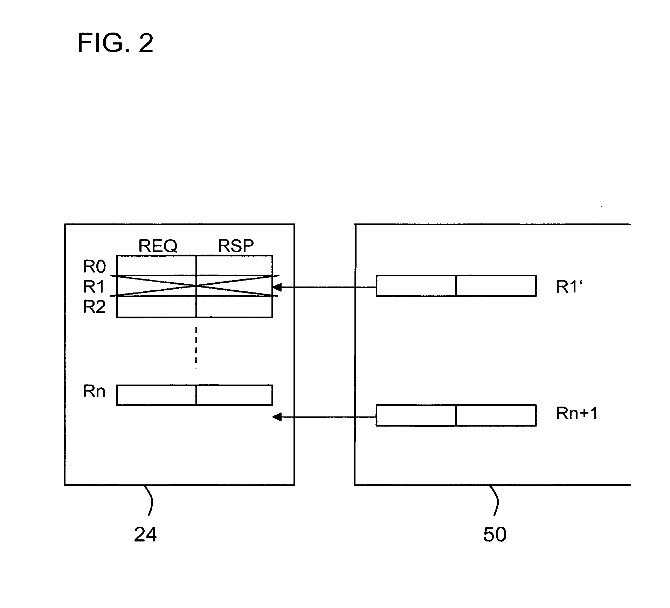

In Figur 2 sind die beiden Varianten dargestellt. Im Regelspeicher 24 sind Umwandlungsregeln R0 bis Rn für n verschiedene Befehle abgelegt. Unter der Annahme, dass es sich bei der zweiten Umwandlungsregel R1 um die dem Positionsanforderungsbefehl zugeordnete Umwandlungsregel handelt, wird diese, wenn er nach dem obigen Beispiel verändert werden soll, durch eine entsprechend veränderte zweite Umwandlungsregel R1' ersetzt. Soll der ursprüngliche Positionsanforderungsbefehl erhalten bleiben, können die Umwandlungsregeln R0 bis Rn alternativ um eine neue Umwandlungsregel Rn+1 ergänzt werden.

Wie in Figur 2 angedeutet, können die Umwandlungsregeln R0 bis Rn für einen Befehl auch getrennt für die aus dem Befehl resultierenden Anfragen und Antworten gespeichert sein. In diesem Fall kann es ausreichend sein, im Falle einer Änderung lediglich den Teil der Umwandlungsregeln R0 bis Rn, der von der Änderung betroffen ist, zu ersetzen.

Änderungen/Ergänzungen im Regelspeicher 24 können massive Auswirkungen auf die Funktion des Positionsmessgerätes 10 haben. Deshalb ist es vorteilhaft, wenn nicht direkt über den Datenübertragungskanal 100 auf den Regelspeicher 24 zugegriffen werden kann, sondern die Programmierung über die CPU 50 erfolgt, der die entsprechenden Daten zugeführt werden. Um in jeden Fall zu verhindern, dass grundsätzliche Befehle, wie z.B. Auswahl-/Schreib- oder Lesezugriffe auf Speicherbereiche/ -adressen verändert werden, sind die Umwandlungsregeln R0 bis Rn, die diese Befehle betreffen, mit Vorteil nicht veränderbar, also beispielsweise in einem schreibgeschützten Bereich des Regelspeichers 24 abgelegt. Darüber hinaus ist es sinnvoll, eine unveränderliche Umwandlungsregel für einen Befehl, der den ursprünglichen Zustand des Regelspeichers 24 wiederherstellt, zu implementieren. Die hierfür erforderlichen Daten der entsprechenden Umwandlungsregeln können beispielsweise in der Speichereinheit 70 abgelegt sein und auf den entsprechenden Befehl von der CPU 50 in den Regelspeicher 24 übertragen werden.

Als weitere Absicherung können Veränderungen im Regelspeicher 24 auf einen speziellen Modus des Positionsmessgeräts 10 beschränkt werden. Die Umschaltung in einen solchen Programmiermodus kann entweder durch einen speziellen Schnittstellenbefehl erfolgen, oder durch einen vom eigentlichen Schnittstellenprotokoll unabhängigen Mechanismus. Hierbei kann beispielsweise, wie in der DE19701310B4 vorgeschlagen, eine Umschaltung durch ein Referenzsignal, das auf einer der Signalübertragungsleitungen des Datenübertragungskanals 100 von der Folgeelektronik 110 zum Positionsmessgerät 10 übertragen wird, initiiert werden.

Die vorliegende Erfindung ist insbesondere dann vorteilhaft, wenn die Schnittstelleneinheit 20 als Modul in einem hochintegrierten applikationsspezifischen Baustein (ASIC) realisiert ist, da dann Modifikationen bzw. Erweiterungen von Schnittstellenbefehlen möglich sind, ohne ein aufwändiges und vor allem kostenintensives Redesign des Bausteins vornehmen zu müssen.

## Patentansprüche

1. Vorrichtung zur Datenübertragung zwischen einem Positionsmessgerät (10) und einer Folgeelektronik (110) über einen Datenübertragungskanal (100), wobei das Positionsmessgerät (10) eine Schnittstelleneinheit (20) und eine Verarbeitungseinheit (30) umfasst, die Schnittstelleneinheit (20) zum einen mit dem Datenübertragungskanal (100) und zum andern zum Zwecke eines internen Datenaustauschs mittels eines Anfragekanals (REQ) und eines Antwortkanals (RSP) mit der Verarbeitungseinheit (30) verbunden ist, wobei die Schnittstelleneinheit (20) einen Befehlsinterpreter (21) umfasst, mit dem unter Verwendung von Umwandlungsregeln (R0..Rn; Rn+1) Befehle, die über den Datenübertragungskanal (100) eintreffen, in interne Anfragen umwandelbar und über den Anfragekanal (REQ) der Verarbeitungseinheit (30) zuführbar sind, sowie Antwortdaten, die von der Verarbeitungseinheit (30) über den Antwortkanal (RSP) eintreffen, in Ausgabedaten umwandelbar sind und die Schnittstelleneinheit (20) weiter einen Regelspeicher (24) zum Speichern der Umwandlungsregeln (R0..Rn; Rn+1) umfasst und der Regelspeicher (24) zumindest teilweise modifizierbar ist.

2. Vorrichtung nach Anspruch 1, wobei die Verarbeitungseinheit (30) eine Positionsmesseinheit (40) umfasst, die mit dem Anfragekanal (REQ) und dem Antwortkanal (RSP) verbunden ist und in der Positionsmesseinheit (40) Positionsdaten und weitere Daten erzeugbar sind.

3. Vorrichtung nach einem der Ansprüche 1 oder 2, wobei die Verarbeitungseinheit (30) weiter eine CPU (50) umfasst, die ebenfalls mit dem Anfragekanal (REQ) und dem Antwortkanal (RSP) verbunden ist.

4. Vorrichtung nach einem der vorhergehenden Ansprüche, wobei der Regelspeicher (24) über den Datenübertragungskanal (100) von der Folgeelektronik (110) modifizierbar ist.

5. Vorrichtung nach Anspruch 3, wobei der Regelspeicher (24) von der CPU (50) modifizierbar ist.

6. Vorrichtung nach einem der vorhergehenden Ansprüche, wobei der Befehlsinterpreter (21) ein spezifisches Schnittstellenmodul (22) und ein allgemeines Schnittstellenmodul (23) umfasst, wobei mit dem spezifischen Schnittstellenmodul (22) über den Datenübertragungskanal (100) eintreffende Befehle in standardisierte Befehle und standardisierte Antwortdaten in spezifische Ausgabedaten zur Ausgabe über den Datenübertragungskanal (100) umwandelbar sind und mit dem allgemeinen Schnittstellenmodul (23) vom spezifischen Schnittstellenmodul (22) eintreffende standardisierte Befehle in interne Anfragen und über den Antwortkanal (RSP) eintreffende Antwortdaten in standardisierte Antwortdaten umwandelbar sind.

7. Vorrichtung nach einem der vorhergehenden Ansprüche, wobei das Positionsmessgerät (10) zur Modifizierung des Regelspeichers (24) in einen Programmiermodus umschaltbar ist.

8. Verfahren zur Datenübertragung zwischen einem Positionsmessgerät (10) und einer Folgeelektronik (110) über einen Datenübertragungskanal (100), wobei das Positionsmessgerät (10) eine Schnittstelleneinheit (20) und eine Verarbeitungseinheit (30) umfasst, die Schnittstelleneinheit (20) zum einen mit dem Datenübertragungskanal (100) und zum andern zum Zwecke eines internen Datenaustauschs mittels eines Anfragekanals (REQ) und eines Antwortkanals (RSP) mit der Verarbeitungseinheit (30) verbunden ist, wobei die Schnittstelleneinheit (20) einen Befehlsinterpreter (21) umfasst, der unter Verwendung von Umwandlungsregeln (R0..Rn; Rn+1) Befehle, die über den Datenübertragungskanal (100) eintreffen, in interne Anfragen umwandelt und über den Anfragekanal (REQ) der Verarbeitungseinheit (30) zuführt, sowie Antwortdaten, die von der Verarbeitungseinheit (30) über den Antwortkanal (RSP) eintreffen, in Ausgabedaten umwandelt und zur Folgeelektronik sendet und die Schnittstelleneinheit (20) weiter einen Regelspeicher (24) zum Speichern der Umwandlungsregeln (R0..Rn; Rn+1) umfasst und der Regelspeicher (24) zumindest teilweise modifizierbar ist.

9. Verfahren nach Anspruch 8, wobei die Verarbeitungseinheit (30) eine Positionsmesseinheit (40) umfasst, von der über den Anfragekanal (REQ) Positionsdaten und/oder weitere Daten angefordert und als Antwortdaten über den Antwortkanal (RSP) zur Schnittstelleneinheit (20) übertragen werden.

10. Verfahren nach Anspruch 8 oder 9, wobei die Verarbeitungseinheit (30) weiter eine CPU (50) umfasst, von der über den Anfragekanal (REQ) Daten angefordert und über den Antwortkanal (RSP) zur Schnittstelleneinheit (20) übertragen werden.

11. Verfahren nach einem der Ansprüche 8 bis 10, wobei der Regelspeicher über den Datenübertragungskanal (100) von der Folgeelektronik (110) modifiziert wird.

12. Verfahren nach einem der Ansprüche 8 bis 10, wobei der Regelspeicher (24) von der CPU (50) modifiziert wird.

13. Verfahren nach einem der Ansprüche 8 bis 12, wobei der Befehlsinterpreter (21) ein spezifisches Schnittstellenmodul (22) und ein allgemeines Schnittstellenmodul (23) umfasst, wobei das spezifische Schnittstellenmodul (22) über den Datenübertragungskanal (100) eintreffende Befehle in standardisierte Befehle und standardisierte Antwortdaten in spezifische Ausgabedaten zur Ausgabe über den Datenübertragungskanal (100) umwandelt und das allgemeine Schnittstellenmodul (23) vom spezifischen Schnittstellenmodul (22) eintreffende standardisierte Befehle in interne Anfragen und über den Antwortkanal (RSP) eintreffende Antwortdaten in standardisierte Antwortdaten umwandelt.

14. Verfahren nach einem der Ansprüche 8 bis 13, wobei das Positionsmessgerät (10) zur Modifizierung des Regelspeichers (24) in einen Programmiermodus geschaltet wird.

## Claims

1. Apparatus for data transmission between a position measuring device (10) and downstream electronics (110) via a data transmission channel (100), wherein the position measuring device (10) comprises an interface unit (20) and a processing unit (30), the interface unit (20) is connected firstly to the data transmission channel (100) and secondly, for the purpose of internal data interchange, by means of a request channel (REQ) and a response channel (RSP) to the processing unit (30), wherein the interface unit (20) comprises a command interpreter (21) that can be used, using conversion rules (R0 .. Rn; Rn+1), to convert commands that arrive via the data transmission channel (100) into internal requests and to supply said requests to the processing unit (30) via the request channel (REQ), and to convert response data that arrive from the processing unit (30) via the response channel (RSP) into output data, and the interface unit (20) additionally comprises a rule memory (24) for storing the conversion rules (R0 .. Rn; Rn+1), and the rule memory (24) is modifiable at least to some extent.

2. Apparatus according to Claim 1, wherein the processing unit (30) comprises a position measuring unit (40) that is connected to the request channel (REQ) and to the response channel (RSP), and position data and further data can be produced in the position measuring unit (40).

3. Apparatus according to either of Claims 1 and 2, wherein the processing unit (30) additionally comprises a CPU (50) that is likewise connected to the request channel (REQ) and to the response channel (RSP).

4. Apparatus according to one of the preceding claims, wherein the rule memory (24) can be modified by the downstream electronics (110) via the data transmission channel (100).

5. Apparatus according to Claim 3, wherein the rule memory (24) can be modified by the CPU (50).

6. Apparatus according to one of the preceding claims, wherein the command interpreter (21) comprises a specific interface module (22) and a general interface module (23), wherein the specific interface module (22) can be used to convert commands arriving via the data transmission channel (100) into standardized commands and standardized response data into specific output data for output via the data transmission channel (100), and the general interface module (23) can be used to convert standardized commands arriving from the specific interface module (22) into internal requests and response data arriving via the response channel (RSP) into standardized response data.

7. Apparatus according to one of the preceding claims, wherein the position measuring device (10) can be changed over to a programming mode in order to modify the rule memory (24).

8. Method for data transmission between a position measuring device (10) and downstream electronics (110) via a data transmission channel (100), wherein the position measuring device (10) comprises an interface unit (20) and a processing unit (30), the interface unit (20) is connected firstly to the data transmission channel (100) and secondly, for the purpose of internal data interchange, by means of a request channel (REQ) and a response channel (RSP) to the processing unit (30), wherein the interface unit (20) comprises a command interpreter (21) that uses conversion rules (R0 .. Rn; Rn+1) to convert commands that arrive via the data transmission channel (100) into internal requests and supplies said requests to the processing unit (30) via the request channel (REQ), and to convert response data that arrive from the processing unit (30) via the response channel (RSP) into output data and sends said output data to the downstream electronics, and the interface unit (20) additionally comprises a rule memory (24) for storing the conversion rules (R0 .. Rn; Rn+1), and the rule memory (24) is modifiable at least to some extent.

9. Method according to Claim 8, wherein the processing unit (30) comprises a position measuring unit (40) that requests position data and/or further data via the request channel (REQ) and transmits said data to the interface unit (20) as response data via the response channel (RSP).

10. Method according to Claim 8 or 9, wherein the processing unit (30) additionally comprises a CPU (50) that requests data via the request channel (REQ) and transmits said data to the interface unit (20) via the response channel (RSP).

11. Method according to one of Claims 8 to 10, wherein the rule memory is modified by the downstream electronics (110) via the data transmission channel (100).

12. Method according to one of Claims 8 to 10, wherein the rule memory (24) is modified by the CPU (50).

13. Method according to one of Claims 8 to 12, wherein the command interpreter (21) comprises a specific interface module (22) and a general interface module (23), wherein the specific interface module (22) converts commands arriving via the data transmission channel (100) into standardized commands and standardized response data into specific output data for output via the data transmission channel (100), and the general interface module (23) converts standardized commands arriving from the specific interface module (22) into internal requests and response data arriving via the response channel (RSP) into standardized response data.

14. Method according to one of Claims 8 to 13, wherein the position measuring device (10) is switched to a programming mode in order to modify the rule memory (24).

## Revendications

1. Dispositif pour la transmission de données entre un appareil de mesure de position (10) et une électronique aval (110) par l'intermédiaire d'un canal de transmission de données (100), dans lequel l'appareil de mesure de position (10) comprend une unité d'interface (20) et une unité de traitement (30), l'unité d'interface (20) est connectée d'une part au canal de transmission de données (100) et d'autre part à l'unité de traitement (30) à des fins d'échange interne de données au moyen d'un canal de demande (REQ) et d'un canal de réponse (RSP), dans lequel l'unité d'interface (20) comprend un interpréteur de commandes (21) au moyen duquel des commandes arrivant par l'intermédiaire du canal de transmission de données (100) peuvent être converties en demandes internes en utilisant des règles de conversion (R0 ... Rn ; Rn+1), et peuvent être acheminées à l'unité de traitement (30) par l'intermédiaire du canal de demande (REQ), et des données de réponse arrivant de l'unité de traitement (30) par l'intermédiaire du canal de réponse (RSP) peuvent être converties en données de sortie et l'unité d'interface (20) comprend en outre une mémoire de règles (24) destinée à stocker les règles de conversion (R0 ... Rn ; Rn+1) et la mémoire de règles (24) est modifiable au moins en partie.

2. Dispositif selon la revendication 1, dans lequel l'unité de traitement (30) comprend une unité de mesure position (40) qui est connectée au canal de demande (REQ) et au canal de réponse (RSP) et des données de position et d'autres données peuvent être générées dans l'unité de mesure de position (40).

3. Dispositif selon l'une quelconque des revendications 1 ou 2, dans lequel l'unité de traitement (30) comprend en outre une CPU (50) qui est également connectée au canal de demande (REQ) et au canal de réponse (RSP).

4. Dispositif selon l'une quelconque des revendications précédentes, dans lequel la mémoire de règles (24) est modifiable par l'intermédiaire du canal de transmission de données (100) par l'électronique aval (110).

5. Dispositif selon la revendication 3, dans lequel la mémoire de règles (24) est modifiable par la CPU (50).

6. Dispositif selon l'une quelconque des revendications précédentes, dans lequel l'interpréteur de commandes (21) comprend un module d'interface spécifique (22) et un module d'interface général (23), dans lequel, au moyen du module d'interface spécifique (22), des commandes arrivant par l'intermédiaire du canal de transmission de données (100) peuvent être converties en commandes normalisées et des données de réponse normalisées peuvent être converties en données de sortie spécifiques en vue de leur fourniture en sortie par l'intermédiaire du canal de transmission de données (100) et, au moyen du module d'interface général (23), des commandes normalisées arrivant en provenance du module d'interface spécifique (22), peuvent être converties en demandes internes et des données de réponse arrivant par l'intermédiaire du canal de réponse (RSP) peuvent être converties en données de réponse normalisées.

7. Dispositif selon l'une quelconque des revendications précédentes, dans lequel l'appareil de mesure de position (10) peut être amené à basculer dans un mode de programmation pour modifier la mémoire de règles (24).

8. Procédé pour la transmission de données entre un appareil de mesure de position (10) et une électronique aval (110) par l'intermédiaire d'un canal de transmission de données (100), dans lequel l'appareil de mesure de position (10) comprend une unité d'interface (20) et une unité de traitement (30), l'unité d'interface (20) est connectée d'une part au canal de transmission de données (100) et d'autre part à l'unité de traitement (30) à des fins d'échange interne de données au moyen d'un canal de demande (REQ) et d'un canal de réponse (RSP), dans lequel l'unité d'interface (20) comprend un interpréteur de commandes (21) qui convertit des commandes arrivant par l'intermédiaire du canal de transmission de données (100) en demandes internes en utilisant des règles de conversion (R0 ... Rn ; Rn+1), et les achemine à l'unité de traitement (30) par l'intermédiaire du canal de demande (REQ), et convertit des données de réponse arrivant de l'unité de traitement (30) par l'intermédiaire du canal de réponse (RSP) en données de sortie et les envoie à l'électronique aval, et l'unité d'interface (20) comprend en outre une mémoire de règles (24) destinée à stocker les règles de conversion (R0 ... Rn ; Rn+1) et la mémoire de règles (24) est modifiable au moins en partie.

9. Procédé selon la revendication 8, dans lequel l'unité de traitement (30) comprend une unité de mesure de position (40) à laquelle des données de position et/ou d'autres données sont demandées par l'intermédiaire du canal de demande (REQ) et sont transmises en tant que données de réponse par l'intermédiaire du canal de réponse (RSP) à l'unité d'interface (20).

10. Procédé selon la revendication 8 ou 9, dans lequel l'unité de traitement (30) comprend en outre une CPU (50) à laquelle des données peuvent être demandées par l'intermédiaire du canal de demande (REQ) et peuvent être transmises à l'unité d'interface (20) par l'intermédiaire du canal de réponse (RSP).

11. Procédé selon l'une quelconque des revendications 8 à 10, dans lequel la mémoire de règles est modifiée par l'intermédiaire du canal de transmission de données (100) par l'électronique aval (110) .

12. Procédé selon l'une quelconque des revendications 8 à 10, dans lequel la mémoire de règles (24) est modifiée par la CPU (50).

13. Procédé selon l'une quelconque des revendications 8 à 12, dans lequel l'interpréteur de commandes (21) comprend un module d'interface spécifique (22) et un module d'interface général (23), dans lequel le module d'interface spécifique (22) convertit des commandes arrivant par l'intermédiaire du canal de transmission de données (100) en commandes normalisées et convertit des données de réponse normalisées en données de sortie spécifiques en vue de leur fourniture en sortie par l'intermédiaire du canal de transmission de données (100) et le module d'interface général (23) convertit des commandes normalisées arrivant en provenance du module d'interface spécifique (22) en demandes internes et convertit des données de réponse arrivant par l'intermédiaire du canal de réponse (RSP) en données de réponse normalisées.

14. Procédé selon l'une quelconque des revendications 8 à 13, dans lequel l'appareil de mesure de position (10) est amené à basculer dans un mode de programmation pour modifier la mémoire de règles (24).
